# FASCICULE DE BREVET EUROPEEN

(11) **EP 0 587 486 B1**
(45) Date de publication et mention de la délivrance du brevet: **22.04.1998**
(21) Numéro de dépôt: 93402160.1
(22) Date de dépôt: 03.09.1993
(51) Int. Cl.: C08G 18/61, C08G 18/28, C08G 18/81, C09D 175/16, C03C 25/02

(54) **Résine polymère pour ruban à fibres optiques**
Polymerharz für ein faseroptisches Kabel
Polymer resin for fibre optic cable

(30) Priorité: 07.09.1992 FR 9210638
(43) Date de publication de la demande: 16.03.1994
(73) Titulaire: ALCATEL ALSTHOM COMPAGNIE GENERALE D'ELECTRICITE, 75008 Paris (FR)
(72) Inventeur: Barraud, Jean-Yves, F-75010 Paris (FR); Gervat, Sophie, F-78340 Les Clayes sous Bois (FR)
(74) Mandataire: Pothet, Jean Rémy Emile Ludovic

(56) Documents cités:
- EP-A- 0 149 741
- EP-A- 0 394 918
- EP-A- 0 407 004
- EP-A- 0 447 789
- WO-A-84/00424
- WO-A-91/17198

## Description

La présente invention concerne une résine polymère pour ruban à fibres optiques.

On sait que les fibres optiques comportent un double revêtement polymère constitué d'un revêtement primaire plastifié en contact avec la fibre de verre et surmonté d'un revêtement secondaire.

Ce double revêtement protège la fibre des agressions mécaniques ou chimiques susceptibles de provoquer des défauts d'atténuation pour les transmissions optiques.

Par ailleurs ces mêmes polymères sont utilisés pour rigidifier un ensemble de fibres et constituer des rubans pour câble optique. A l'heure actuelle, les matériaux de revêtements de fibres et pour rubans sont des polymères du type uréthanne acrylate photoréticulés sous rayonnement ultraviolet. Ainsi les fibres optiques, individualisées grâce à une couche mince organique colorée, sont regroupées et solidarisées côte à côte par une résine uréthanne acrylate, comme cela est décrit par exemple dans la demande de brevet EP 0 407 004.

Les rubans réalisés de cette manière doivent pouvoir glisser suffisamment les uns sur les autres pour assurer la compacité maximale du câble; or on constate que la qualité de glissement est insuffisante. D'autre part la résine du ruban adhère trop aux couches minces organiques colorées des fibres individuelles lorsqu'il faut l'éliminer pour réaliser une à une les connexions entre les fibres de deux rubans. On constate enfin que l'absorption à l'humidité des uréthannes acrylates est importante, alors que les applications des fibres optiques, même dans la transmission terrestre, exigent une étanchéité optimale.

La présente invention a pour but d'améliorer les résines de type uréthanne acrylate pour leurs applications dans les rubans de fibres optiques.

La présente invention a pour objet une résine polymère pour ruban à fibres optiques, caractérisée par le fait qu'elle est formée à partir d'un mélange comprenant d'une part un premier polymère de base, choisi parmi un époxy acrylate et un uréthanne acrylate, et d'autre part un copolymère bloc contenant un bloc polydiméthylsiloxane et un bloc choisi dans le groupe uréthanne, époxyuréthanne, époxy, uréthanne acrylate, époxyacrylate, époxy uréthanne acrylate, ledit copolymère se trouvant dans une proportion comprise entre 0,5% et 20% en poids dudit mélange.

Avantageusement, ledit copolymère se trouve dans une proportion comprise entre 1% et 10% en poids dudit mélange.

On constate qu'une résine selon l'invention présente des propriétés de glissement très améliorées vis-à-vis de celles des résines antérieures, propriétés mise en évidence par une mesure d'angle de contact d'une goutte d'eau.

Avantageusement, ledit copolymère répond à l'une des formules suivantes:

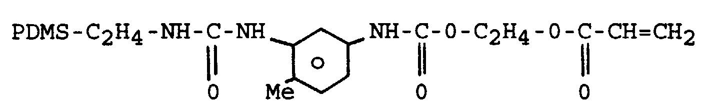

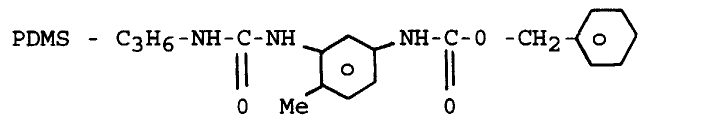

Selon un autre mode de réalisation de l'invention la résine est une résine polymère pour ruban à fibres optiques caractérisée par le fait qu'elle est formée à partir d'un mélange comprenant d'une part un premier polymère de base, choisi parmi un époxy acrylate et un uréthanne acrylate, et d'autre part un copolymère bloc répondant à la formule suivante :

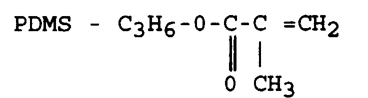

Selon une variante préférentielle de réalisation, ledit mélange comprend en outre un second polymère choisi parmi un polydiméthylsiloxane (PDMS) et un polyméthyl phénylsiloxane, dans une proportion inférieure à 20% en poids dudit mélange.
La présence du copolymère permet d'incorporer le second polymère dans ledit mélange alors qu'auparavant cette incorporation n'était pas possible. Le copolymère assure en effet une fonction d'agent compatibilisant entre le premier et le second polymères; l'alliage de polymères ainsi créé conjugue toutes les propriétés de ses deux polymères de base, ce qui lui confère en particulier des propriétés de glissement très intéressantes.

D'autres caractéristiques et avantages de la présente invention apparaîtront au cours de la description suivante d'exemples de réalisation donnés à titre illustratif mais nullement limitatif.

### EXEMPLE 1

Le premier polymère de base est une résine uréthanne acrylate désignée par la marque "DESOLITE 932". Selon l'invention on le mélange à 40°C avec 10% (en poids) de copolymère polysiloxane polyuréthanne de formule:

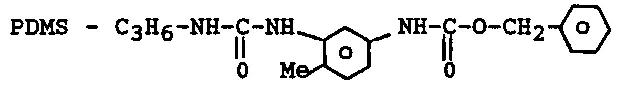

Ce copolymère est obtenu en faisant réagir 174g (1 mole) de toluène diisocyanate, 108g (1 mole) d'alcool benzylique, 1229g (1 mole NH₂) de polysiloxane aminé dans 1943g de xylène.

### EXEMPLE 2

Le premier polymère de base est une résine uréthanne acrylate désignée par la marque "DESOLITE 931". Selon l'invention on la mélange à 40°C avec 15% (en poids) de copolymère polysiloxane à greffon uréthanne acrylate de formule:

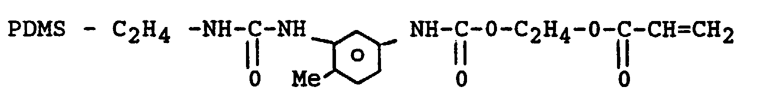

Ce copolymère est obtenu en faisant réagir 1229g (1 mole NH₂) de polysiloxane aminé avec le produit issu de la réaction de l'hydroxyéthylacrylate sur le toluène diisocyanate et de formule:

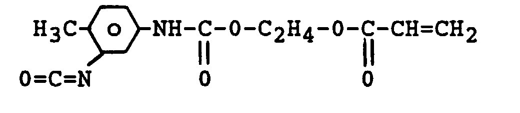

### EXEMPLE 3

Le premier polymère de base est la résine de l'exemple 1 désignée par la marque "DESOLITE 932". Selon l'invention on la mélange à 40°C,
- avec 3% en poids du copolymère, polysiloxane-polyuréthanne de l'exemple 1,
- avec 9% en poids d'un second polymère, le polydiméthylsiloxane.

Des échantillons 1, 2, 3 sont préparés respectivement avec les matériaux des trois exemples précédents, sous la forme de films de 60 µm d'épaisseur. Ces films sont obtenus par photoréticulation à 312nm sous 30mJoules/minute pendant 30 minutes.

Un échantillon témoin (art antérieur) est réalisé de la même manière avec le seul polymère de base de l'exemple 1.

On caractérise la propriété de glissement des échantillons par l'angle de contact Θ en degrés d'une goutte d'eau à 22°C. Le tableau I récapitule les résultats obtenus.

**TABLEAU I**

| Echantillon | Θ |
|---|---|
| témoin | 82° |
| mélange 1 | 102° |
| mélange 2 | 103° |
| mélange 3 | 106° |

## Revendications

1. Résine polymère pour ruban à fibres optiques caractérisée par le fait qu'elle est formée à partir d'un mélange comprenant d'une part un premier polymère de base, choisi parmi un époxy acrylate et un uréthanne acrylate, et d'autre part un copolymère bloc contenant un bloc polydiméthylsiloxane et un bloc choisi dans le groupe uréthanne, époxyuréthanne, époxy, uréthanne acrylate, époxyacrylate, époxy uréthanne acrylate, ledit copolymère se trouvant dans une proportion comprise entre 0,5% et 20% en poids dudit mélange.

2. Résine selon la revendication 1, caractérisée par le fait que ledit copolymère se trouve dans une proportion comprise entre 1% et 10% en poids dudit mélange.

3. Résine selon l'une des revendications précédentes, caractérisée par le fait que ledit copolymère répond à l'une des formules suivantes:

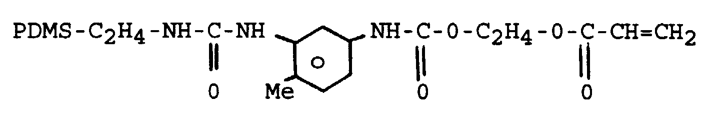

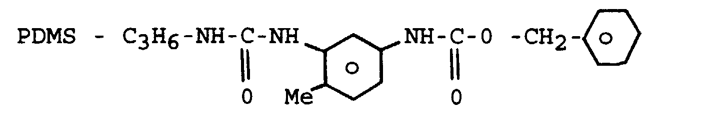

4. Résine polymère pour ruban à fibres optiques caractérisée par le fait qu'elle est formée à partir d'un mélange comprenant d'une part un premier polymère de base, choisi parmi un époxy acrylate et un uréthanne acrylate, et d'autre part un copolymère bloc répondant à la formule suivante :

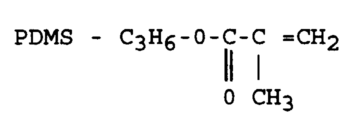

5. Résine selon l'une des revendications précédentes, caractérisée par le fait que ledit mélange comprend en outre un second polymère choisi parmi un polydiméthylsiloxane (PDMS) et un polyméthyl phénylsiloxane, dans une proportion inférieure à 20% en poids dudit mélange.

## Patentansprüche

1. Polymerharz für ein faseroptisches Band, dadurch gekennzeichnet, daß es ausgehend von einer Mischung hergestellt ist, die einerseits ein erstes Basispolymer, das aus einem Epoxyacrylat und einem Urethanacrylat ausgewählt ist, und andererseits ein Blockcopolymer umfaßt, welches einen Polydimethylsiloxan-Block und einen aus der Gruppe Urethan, Epoxyurethan, Epoxy, Urethanacrylat, Epoxyacrylat, Epoxyurethanacrylat ausgewählten Block enthält, wobei dieses Copolymer in einem Verhältnis im Bereich von 0,5 Gew.-% und 20 Gew.-% der genannten Mischung vorliegt.

2. Harz nach Anspruch 1, dadurch gekennzeichnet, daß das genannte Copolymer in einem Verhältnis von 1 Gew.-% bis 10 Gew.-% der Mischung vorliegt.

3. Harz nach einem der vorhergehenden Ansprüche, dadurch gekennzeichnet, daß das genannte Copolymer einer der folgenden Formeln 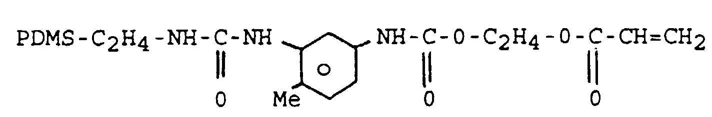 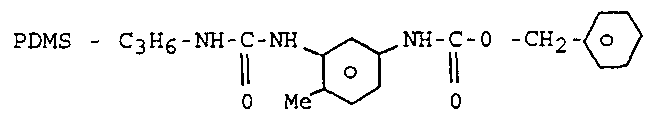 entspricht.

4. Polymerharz für ein faseroptisches Band, dadurch gekennzeichnet, daß es ausgehend von einer Mischung hergestellt ist, die einerseits ein erstes Basispolymer, das aus einem Epoxyacrylat und einem Urethanacrylat ausgewählt ist, und andererseits ein Blockcopolymer umfaßt, das der folgenden Formel 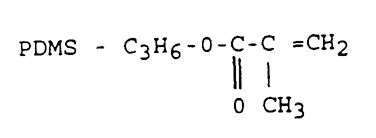 entspricht.

5. Harz nach einem der vorhergehenden Ansprüche, dadurch gekennzeichnet, daß die genannte Mischung außerdem ein zweites Polymer, das aus einem Polydimethylsiloxan (PDMS) und einem Polymethylphenylsiloxan ausgewählt ist, in einem Verhältnis von weniger als 20 Gew.-% der genannten Mischung enthält.

## Claims

1. Polymeric resin for optical fibre ribbons characterised in that it is formed from a mixture comprising a first base polymer selected from epoxy acrylate and urethane acrylate and a block copolymer in a proportion of between 0.5% and 20% by weight of said mixture containing a polydimethylsiloxane block and a block selected from the group comprising urethane, epoxyurethane, epoxy, urethane acrylate, epoxyacrylate and epoxyurethane acrylate.

2. Resin according to claim 1 characterised in that said copolymer is present in a proportion of between 1% and 10% by weight of said mixture.

3. Resin according to claim 1 or claim 2 characterised in that said copolymer has one of the following formulae:

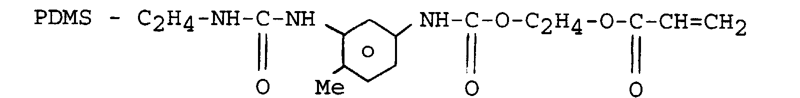

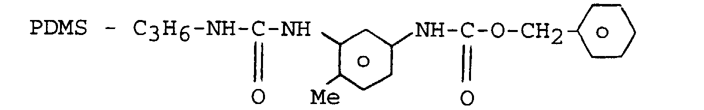

4. Polymeric resin for optical fibre ribbons characterised in that it is formed from a mixture comprising a first base polymer selected from epoxy acrylate and urethane acrylate and a block copolymer having the following formula:

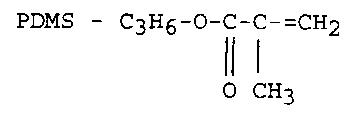

5. Resin according to any one of the preceding claims characterised in that said mixture further comprises a second polymer in a proportion of less than 20% by weight of said mixture selected from polydimethylsiloxane (PDMS) and polymethylphenylsiloxane.
